# EUROPEAN PATENT APPLICATION

(11) **EP 1 800 944 A2**
(43) Date of publication of application: **27.06.2007**
(21) Application number: 06126319.0
(22) Date of filing: 18.12.2006
(51) Int. Cl.: B60N 2/48

(54) **Active head restraint apparatus for vehicle seats**

(30) Priority: 21.12.2005 GB 0525920
(71) Applicant: Nissan Motor Manufacturing (UK) Ltd., Cranfield, Bedfordshire MK43 0DB (GB)
(72) Inventor: Davies, John Nissan Motor Man. (UK) Ltd. IP, Cranfield, Bedfordshire MK43 0DB (GB)
(74) Representative: Hufton, Victoria Alice

(57) **Abstract**

A vehicle seat comprising a back support and an active head restraint apparatus (10) pivot mounted to the back support, the head restraint apparatus comprising a head restraint pad (12) connected with an actuating lever (30) extending internally of the back rest for causing pivot movement of the head restraint pad towards the head of an occupant of the seat when the occupant's back presses against the back rest to apply a force to the actuating lever due to vehicle collision and a locking arrangement (34, 38) for allowing the pivot movement of the head restraint pad towards the occupant's head and substantially preventing return pivot movement of the head restraint pad.

## Description

The invention relates to active head restraint apparatus for vehicle seats and particularly, but not exclusively to active head restraint apparatus for automobile seats.

It is known to provide electrically actuated active head restraint apparatus (commonly referred to as head rests) in vehicles. One such head restraint apparatus comprises a head restraint body that has legs or stems on which it is positioned above the seat to which it is fitted and a pad that can be deployed fowardly of the head restraint body in the event of the sensor detecting a rear impact collision. The forward movement of the pad may be provided by a pyrotechnic device or a torsion spring. Where a torsion spring is used, the pad is held in its normal position by means of an electromagnetic device. When a sensor of the apparatus detects a rear impact collision, the electromagnetic device is actuated to release the pad so that the spring can drive it forward. Where a pyrotechnic device is used, the sensor causes current to be provided to the device to cause it to fire and provide a force that drives the pad forwards.

Electrically actuated head restraint apparatus of the aforementioned type is relatively complicated and requires a sensor in order to operate. A further disadvantage where a pyrotechnic device is used is that once the pad has been deployed, it is necessary to fit a new pyrotechnic device if it is to be activated again at any time in the future. Where an electromagnetic device is used, the pad may be reset, but this usually requires a special tool. A disadvantage of both types of head restraint is that it is necessary to provide large current into the seat to trigger the electromagnetic device/deploy the pyrotechnic device.

Another known active head restraint apparatus uses a lever and pivot mechanism. The head restraint apparatus comprises a head restraint pad mounted on a pair of legs, or stems, that are received in respective stem guides provided in a housing. The housing is pivot mounted to the back support of the seat and a lever arm is connected to the housing and extends into the back support. A back pad is mounted on the end of the lever arm remote from the housing. In the event of a rear impact collision, the occupant of the seat is momentarily stationary relative to the seat as the seat accelerates forward. As a result, the occupant's back presses hard against the back pad pushing it rearwardly and causing the head restraint pad to pivot forwardly towards the occupant's head. A problem with this type of head restraint is that when the impact is heavy, the occupant tends to ride up the back support, so sliding off the back pad and releasing the head restraint pad. This allows the head restraint pad to move rearwardly towards its normal (stowed) position so that the head restraint pad moves away from the occupant's head in just the circumstances when the head most needs restraint, typically during the phase of occupant kinematics where even support of the thorax and the head is most critical to mitigate the load on the upper cervical spine. A head restraint pad that moves away from the occupant's head during a severe rear collision impact, so unevenly supporting the occupant's thorax and head, may lead to increased shear loading in the upper neck, which is a common cause of whiplash injury.

It is an object of the invention to at least partially reduce these problems and/or to provide an alternative to existing head restraint apparatus on the market.

According to a first aspect of the invention, there is provided a vehicle seat comprising a back support and an active head restraint apparatus pivot mounted to the back support, the head restraint apparatus comprising a head restraint pad connected to lever means for causing pivot movement of the head restraint pad towards the head of an occupant of the seat when the occupant's back presses against the back support to apply a force to the lever means due to vehicle collision. The head restraint apparatus further comprises a locking means for allowing said pivot movement of the head restraint pad towards the occupant's head but substantially preventing return pivot movement of the head restraint pad.

The invention will now be described, by way of example only, with reference to the drawings, in which:
Figure 1 is a schematic side elevation of a first embodiment of an active head restraint apparatus, according to the invention, for a vehicle seat, with the head restraint pad in a normal, or stowed, position;
Figure 2 shows the head restraint apparatus of Figure 1 in its deployed position after a rear collision impact;
Figure 3 is a perspective view of a second embodiment of an active head restraint apparatus of the invention;
Figure 4 is a schematic perspective view of a vehicle seat fitted with a third embodiment of an active head restraint apparatus of the invention;
Figure 5 is an end elevation of a portion of the head restraint apparatus of Figure 4:
Figure 6 is a schematic part sectioned view of a fourth embodiment of an active head restraint of the invention; and
Figure 7 is a broken perspective of a pivot mountable sleeve of the apparatus of Figure 6.

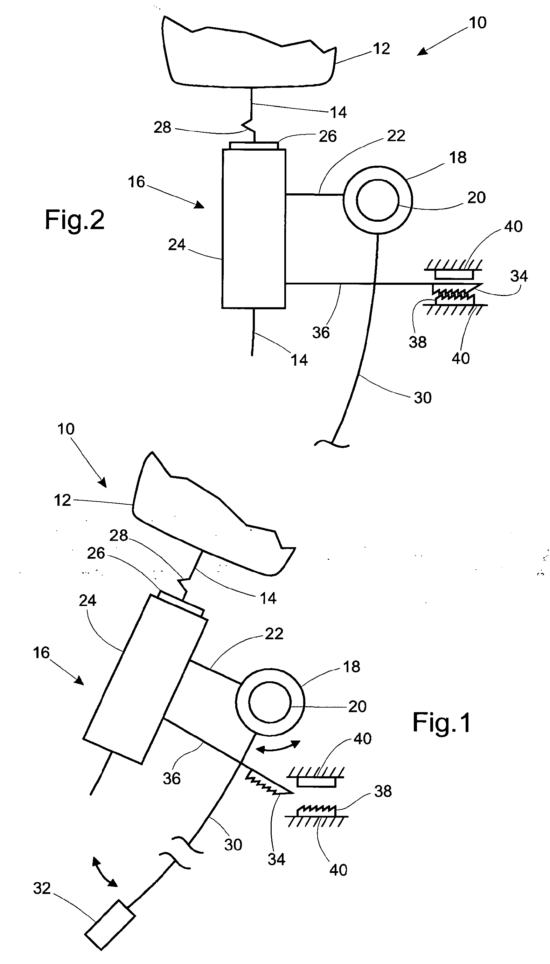

Referring to Figures 1 and 2, an active head restraint apparatus 10 for a vehicle seat (not shown) comprises a head restraint pad 12 having a pair of projecting support legs or stems 14 (only one of which is shown) that are disposed in parallel spaced apart relation.

A mounting apparatus 16 for mounting the head restraint pad 12 to a vehicle seat back support comprises a pivot mountable body 18. The body 18 is pivot mounted on or about a transverse member 20 of the frame of the back support, which transverse member runs adjacent and parallel to the upper edge of the back support of the seat. An arm 22 has one end fixed to the body 18 and another end fixed to a carrier member 24 that carries a cylindrical guide 26. The arm 22 may be of any convenient size and shape and may, for example, be a plate welded between the body and the carrier member parts 18, 24. The cylindrical guide 26 has an axially extending bore in which one of the support legs 14 is received. Although not shown, a second arm (i.e. equivalent to the arm 22) carrying a second cylindrical guide 26 is fixed to the body 18 and the other support leg (i.e. equivalent to 14) is received in the bore of the second cylindrical guide. The support legs 14 are provided with a series of recesses 28 disposed at spaced apart intervals along the length of the leg 14. The bores of the cylindrical guides 26 are each provided with a spring loaded detent (not shown) for engaging in the recesses 28 to provide a series of vertical adjustment positions of the head restraint pad 12.

A lever means in the form of a pair of lever arms 30 (only one of which is shown) extends from the body 18. The lever arms 30 are disposed in parallel spaced apart relation and their ends remote from the body 18 are interconnected by a back pad 32. The lever arms 30 extend internally of the seat back support such that the back pad 32 is located at a position in which the back of the occupant of the seat will press against the back pad in the event of a significant rear impact collision of the vehicle in which the seat is fitted.

A locking means for the mounting apparatus 16 comprises a locking device having a first ratchet member 34 that is carried on an arm 36 that projects from one of the cylindrical guides 26 through an opening in the respective carrier 24 towards the rear of the seat. The locking device further comprises a second ratchet member 38 that is secured to a part 40 of the frame of the vehicle seat back support. It is preferable for both cylindrical guides 26 to be provided with such a ratchet locking means so as to maintain a symmetry to the action of the forces on the apparatus.

Figure 1 shows the head restraint apparatus 10 in a non-deployed condition. In this condition, the head restraint pad 12 is disposed in a rearward, stowed, position in which it will not contact the head of the occupant of the seat and the first and second ratchet members 34, 38 are disengaged. If the vehicle in which the seat is fitted is subject to a significant rear impact, the inertia of the occupant of the seat tends to cause a differential movement between the seat and the occupant, with the seat moving forward relative to the occupant. This causes the occupant's back to push against, and therefore load, the back pad 32. As a result of the back pad 32 being loaded, the body 18 is caused to pivot about the transverse member 20 in an anticlockwise direction (as viewed in the drawing), thus moving the head restraint pad 12 forwards towards the occupant's head, and thereby reducing the gap between the head restraint pad 12 and the occupant's head. As shown in Figure 2, as the head restraint pad 12 pivots forwards towards the occupant's head, the first ratchet member 34 is driven rearwards into engagement with the second ratchet member 38. The respective sets of teeth on the ratchet members are arranged so that the ratchet members 34, 38 slide over one another as the first ratchet member is driven rearwards. If, for any reason, the pressure of the occupant's back on the back pad 32 is released, the engagement of the teeth of the ratchet members 34, 38 prevents return movement of the head restraint pad 12, which is then effectively locked against rearwards movement.

Once the head restraint pad 12 has been deployed to a forward position, it will remain there, locked in place by the engagement of the ratchet members 34, 38, until it is reset. Resetting can be accomplished by moving at least one of the cylindrical guides 26 angularly about its axis through a predetermined angle. Rotation of the cylindrical guides 26 causes a link (not shown) carried by one or both of the cylindrical guides to open the ratchet locking device allowing the body 18 to pivot clockwise about the transverse member 20 to return to the head restraint pad 12 to the non-deployed position of Figure 1.

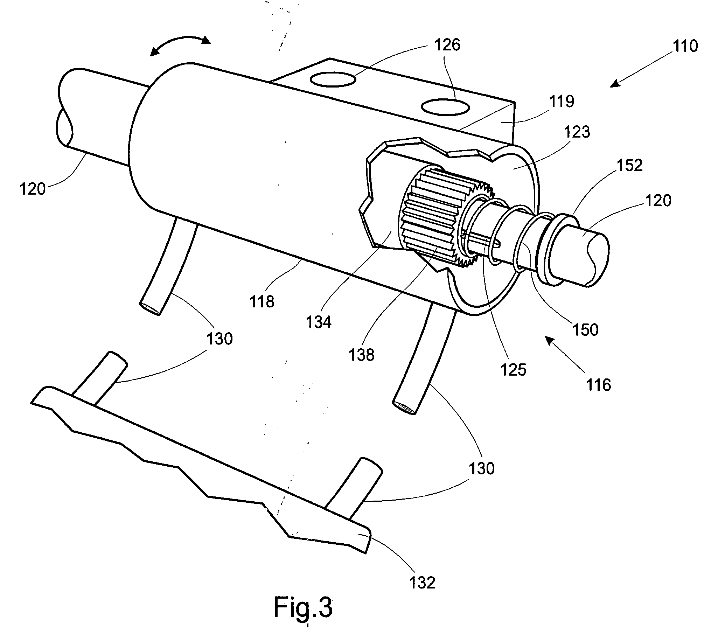

Figure 3 shows a second embodiment of an active head restraint apparatus 110 for a vehicle seat. For ease of reference, parts of the apparatus 110 that are the same as, or similar to, parts of the apparatus 10 in Figures 1 and 2 are referenced by the same reference numeral incremented by 100.

The head restraint apparatus 110 comprises a mounting apparatus 116 for mounting a head restraint pad (not shown) to the vehicle seat back support. The head restraint pad may take the same form as that shown in Figures 1 and 2, or any other suitable form, and will not be described in any further detail. The apparatus 116 comprises a cylindrical pivot mountable body in the form of a sleeve 118 that is pivot mounted on a transverse member 120 of the frame of the vehicle seat back support. A mounting block 119 is mounted upon the sleeve 118, with the block 119 having two bores 126 for receiving a respective one of the legs of the head restraint pad (not shown in Figure 2). The legs may be received directly in the bores 126 or in cylindrical guide sleeves (not shown) that are similar to, or the same as, the guide sleeves 26 of Figures 1 and 2.

A pair of lever arms 130 extends from the sleeve 118 in parallel spaced apart relation. The ends of the lever arms 130 remote from the sleeve 118 are interconnected by a back pad 132. The lever arms 130 are configured to extend internally of the seat back support such that the back pad 132 is located at a position in which the back of the occupant of the seat will press against the back pad in the event of a significant impact to the rear of the vehicle in which the seat is fitted.

A counter bore 123 is provided at one end of the sleeve 118 to receive a locking means in the form of a locking device including a first tubular ratchet member 134 and a second tubular ratchet member 138. The first ratchet member 134 is fixed to the sleeve 118, within the counter bore 123, so as to be rotatable about the transverse member 120, together with the sleeve 118. The second tubular ratchet member 138 has a central bore to allow it to be fitted on the transverse member 120. The first ratchet member 134 has a central through bore (not identified) through which the second tubular ratchet member 138 extends coaxially. Ratchet teeth formed on the arcuate internal surface of the member 134. The second tubular ratchet member 138 has teeth on its outer arcuate surface for engaging the teeth of the first ratchet member 134. The second ratchet member 138 is slideable along the transverse member 120 but is prevented from rotating relative to the transverse member 120 by means of a rib formed in its central bore that engages in a groove 125 provided in the surface of the transverse member 120.

In Figure 3, the first and second ratchet members 134, 138 are engaged normally. In the event of a rear impact collision of sufficient force, the back of the occupant of the seat to which the head restraint apparatus 110 is fitted will be pressed into the vehicle seat back support, so driving the back pad 132 rearwards within the seat back support. This causes the sleeve 118 to rotate anticlockwise (as viewed in the drawing) about the transverse member 120. The teeth of the ratchet members 134, 138 are arranged such that anticlockwise rotation of the sleeve 118 is permitted but return (clockwise) rotation of the sleeve 118 is substantially prevented. Thus, even if the load applied to the back pad 132 by the occupant is released, the sleeve 118 cannot rotate clockwise (i.e. return to the stowed position) until reset, and so the head restraint pad cannot move backwards away from the occupant's head.

The head restraint pad remains locked in its deployed position until a decision is made to release it. Release of the locking device can be obtained by having a knob, pull handle or pull lever mounted at the side of the seat back support adjacent the pivot axis of the sleeve 118, or at the top of the seat frame, and connected to the second ratchet member 138 by a linkage or tie. For example, a tie in the form of a suitable wire (not shown) extends generally parallel to the transverse member 120. One end of the tie is secured to the second ratchet member 138 and the other end is secured to a pull handle (not shown). By pulling on the tie, the second ratchet member 138 can be moved axially along the transverse member 120 (to the right as viewed in Figure 3) to disengage from the first ratchet member 134. Once the ratchet members 134, 138 are disengaged, the sleeve 118 can be rotated clockwise to return the head restraint pad to its non-deployed position. Axial movement of the second ratchet member 138 acts against the force of a compression return spring 150 mounted between the second ratchet member 138 and a collar 152 fixed on the transverse member 120. When the pull handle is released, the return spring 150 acts to push the second ratchet member 138 back into engagement with the first ratchet member 134. If desired, a second spring (not shown) may be used to assist the user in returning the pad to the stowed position.

Although not shown in Figure 3, in a modification a ratchet locking means comprising a further pair of ratchet members may be provided at each end of the sleeve 218 to provide the same function as the first and second ratchet members 134, 138.

In another, simplified embodiment, the pair of levers 130 may be replaced with a single lever if packaging spec is limited.

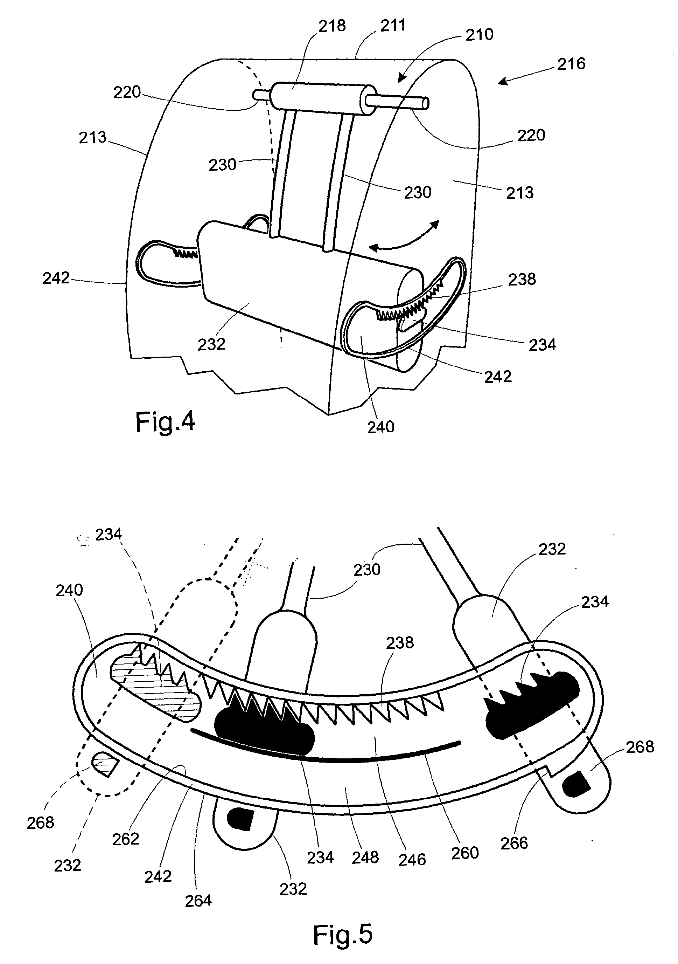

Figures 4 and 5 illustrate a third embodiment of an active head restraint apparatus 210 for a vehicle seat. For ease of reference, parts of the apparatus 210 that are the same as, or similar to, parts of the apparatus 10 in Figures 1 and 2 are referenced by the same reference numeral incremented by 200.

In Figure 4, the head restraint apparatus 210 is shown fitted in the back support 211 of a vehicle seat. The head restraint apparatus 210 comprises a mounting apparatus 216 comprising a pivot mountable body 218 pivot mounted on a transverse member 220 of the frame of the back support 211. Although not shown, the body 218 is provided with means for receiving the legs of a head restraint pad (not shown), which may take the same form as shown in Figures 1 and 2 or Figure 3, or may take any other suitable form.

A pair of parallel spaced apart lever arms 230 are secured to the body 218 and extend downwardly within the back support 211. A back pad 232 in the form of a transverse member interconnects those ends of the lever arms 230 that are disposed remote from the body 218. In this embodiment, the back pad 232 extends across the full width of the back support 211 such that its ends are disposed adjacent to respective sides 213 of the back support 211.

Although not shown, the lever arms 230 are secured to the body 218 in such a way as to allow limited displacement of the lever arms 230 relative to the body 218 in a vertical direction. The permitted displacement allows the lever arms 230 to move relative to the body 218 in the lengthways direction so that the back pad 232 can be pushed downwardly from its rest position by a force transmitted through the lever arms 230. The back pad 232 is biased to its rest position by a suitable biasing mechanism (not shown). The lever arms 230 are operatively connectable with the head restraint pad such that the downward displacement of the back pad 232 can be achieved by pushing on the head restraint pad. Downward displacement is used to release a ratchet locking means, as described in more detail below.

As shown in more detail in Figure 5, the locking means takes the form of a locking device comprising a first ratchet member 234 fitted to an end of the back pad 232 facing one side 213 of the back support 211 and another first ratchet member (not shown) fitted to the other end of the back pad 232 facing the other side 213 of the back support 211. The locking means also comprises a pair of second ratchet members 238, one on each side of the back pad 232, each one of which cooperates with a respective one of the first ratchet members 234 to provide a one way locking function through engagement of ratchet teeth.

Each of the second ratchet members 238 is received within an aperture 240 formed in a respective ratchet guide 242. The ratchet guides 242 are fitted to the back support frame, one on either side, with each guide 242 having two tracks 246, 248 defined one on either side of a rail 260 that extends along the aperture length. The uppermost one of the two tracks 246 is defined between the upper side of the rail 260 and the teeth of the second ratchet member 238. The lowermost one of the two tracks 248 is defined between the underside of the rail 260 and a lower edge 264 of the aperture 240. Although not shown, the outer side of the apertures 240 may be closed by a wall integral to the ratchet guide 242; the wall providing support for the rail. Alternatively, the rail 260 may be supported in any convenient way that leaves the tracks 246, 248 clear for sliding movement of the first ratchet member 234 through them.

The lower edge 264 of the ratchet guide 242 defines a stop surface 266 for a protrusion 268 carried by the back pad 232, so limiting rearward movement of the back pad 232 as the protrusion 268 engages the stop surface 266.

In Figure 4, the head restraint apparatus 210 is shown with the body 218 pivoted anticlockwise to a position which puts the head restraint pad in its deployed (forward) position. In this position, the first ratchet members 234 are disposed towards the rear of the apertures 240 with the teeth of the first ratchet members 234 engaging the teeth of the associated second ratchet members 238. The engagement of the teeth of the respective pairs of ratchet members 234, 238 prevents the body 218 from rotating clockwise and so the head restraint pad is locked in its deployed position.

Referring to Figure 5, the position of the back member 232 when the head restraint pad is in a non-deployed condition is shown in dashed lines. In the event of a rear impact collision affecting the vehicle in which the head restraint apparatus 210 is fitted, the body 218 pivots anticlockwise about the transverse member 220 as the back pad is pushed rearwards to cause the head restraint pad to move forward towards the head of the occupant of the seat. The movement of the back pad 232 which produces the forward movement of the head restraint pad simultaneously moves the first ratchet member rearwards along the upper track 246. In the event of sufficient force being applied via the back pad 232, or a force being applied for a sufficient period of time, the head restraint pad is moved to its fully deployed position, which is defined by engagement of the protrusion 268 with the stop 260 defined by the ratchet guide 242.

To release the first ratchet member 234 so that the head restraint pad can be moved back to its normal non-deployed position, the user grasps the head restraint pad and pushes it rearwards (i.e. towards the rear of the vehicle) and downwards. This allows the protrusion 268 to clear the stop 266 and brings the back pad 232 to the far right position shown in Figure 5. From there, a further downwards push brings the first ratchet member 234 into line with the rear end of the lower track 248, so switching the first ratchet member 234 between a position in which it aligns with the upper track 246 and a position in which it aligns with the lower track 248. As the lower track 248 is free of teeth, from this position the first ratchet member 234 can be moved readily to the front end of the lower track 248 by pushing the head restraint pad rearwards (hence moving the back pad 232 forwards) as far as it will allow. Preferably, the mounting apparatus 216 is provided with a biasing mechanism, for example a torsion spring, to provide a forwards and upwards tension to the back pad 232 to resist inadvertent deployment of the head restraint apparatus 210 and assist the user in returning the apparatus to its non-deployed position.

As for the previous embodiment, in a simplified version of the embodiment of Figures 4 and 5, only a single arm 230 needs to be used if packaging space is limited.

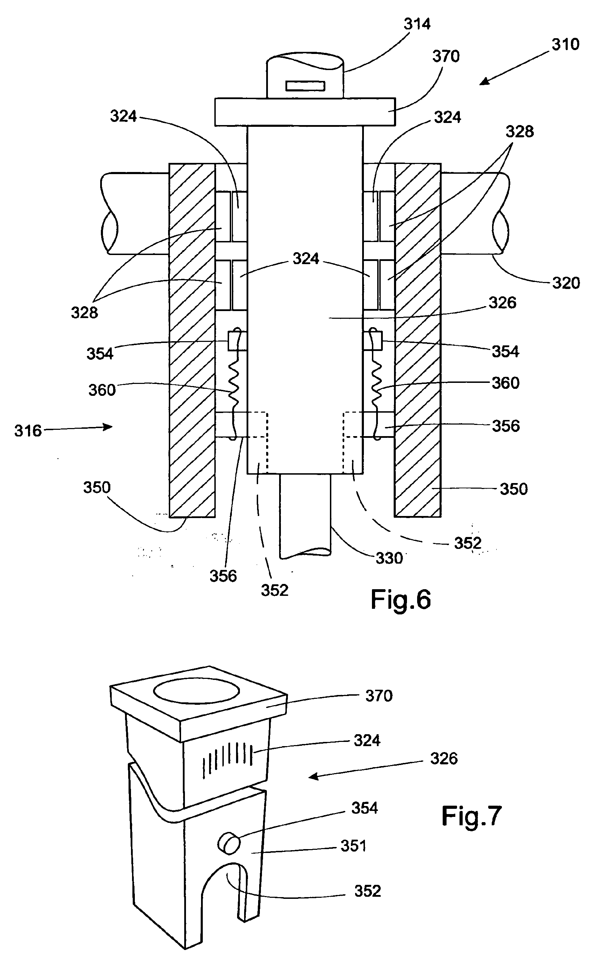

Figures 6 and 7 show a fourth embodiment of an active head restraint apparatus 310 for a vehicle seat. For ease of reference, parts of the apparatus 310 that are the same as, or similar to, parts of the apparatus 10 in Figures 1 and 2 are referenced by the same reference numeral incremented by 300.

Referring to Figure 6, a head restraint apparatus 310 comprises a mounting apparatus 316 including a U-shaped bracket 350 which is welded to a transverse member 320 of the vehicle seat back support (not shown). A guide sleeve 326 for a leg or stem 314 of the head restraint pad (not shown) is pivot mounted in the U-shaped bracket 350.

Respective opposed arcuate recesses 352 are provided in two opposed sides 351 of the guide sleeve 326. The sides 351 of the guide sleeve 326 are also provided with small cylindrical projections 354, described further below, which are used as mounting points for the end of a tension spring 360. In addition, each side 351 of the guide sleeve 326 is provided with a first ratchet member 324 including a series of ratchet teeth (not visible) formed integrally with the sleeve 326.

A pair of cylindrical mounting pins 356 are provided on opposite internal walls of the U-shaped bracket 350. The guide sleeve 326 is pivot mounted in the U-shaped bracket 350 by seating the recesses 352 on the mounting pins 356. The sides of the U-shaped bracket are provided with a second ratchet member 338 including a plurality of teeth arranged to engage the teeth of the corresponding one of the first ratchet members 324 when the guide sleeve 326 is seated on the mounting pins 356.

A pair of tension springs 360 extend between the cylindrical projections 354 and mounting pins 356, the arrangement being such that the springs pull the guide sleeve 326 down onto the mounting pins 356.

In this embodiment, the legs of the head restraint pad 314 may be integral with the lever arms 330, or the legs and lever arms may fit separately into opposite ends of the guide sleeves 326. In the same way as in the previous embodiments, a back pad (not shown) connects the ends of the lever arms 330.

In use, if the vehicle in which the head restraint apparatus is mounted is subject to an impact from the rear, the seat occupant's back will press against the back support such that the back pad is pushed rearwards within the back support (into the plane of the paper for Figure 6). This causes the guide sleeve 326 to pivot forwards (out of the plane of the paper for Figure 6) on the mounting pins 356, thus moving the head restraint pad in the same direction and towards the seat occupant's head. The teeth of the ratchet members 324, 328 are shaped to permit forward pivoting movement of the guide sleeve 326, but to prevent back pivoting and so, as with the previous embodiments, if the load applied by the seat occupant's back is no longer applied to the back pad, the head restraint pad will be locked in a forward position close to the seat occupant's head and will not be able to pivot back until the lock provided by the ratchet teeth is released.

When a user wishes to return the head restraint pad to its normal, stowed, position, the guide sleeve 326 is pulled upwardly by gripping a collar 370 provided at the upper end of the guide sleeve. The upward movement of the guide sleeve 326 takes the first ratchet member 324 to a position in which it no longer engages the second ratchet member 328. Once the first ratchet member 324 is clear of the second ratchet member 328, the guide sleeve 326 can simply pivot rearwards (into the plane of the paper in Figure 6). A biasing arrangement (not shown) may be provided for assisting in moving the guide sleeve 326 back to its start position. When the user releases the collar 370, the springs 360 pull the guide sleeve 326 down onto the mounting pins 356.

It will be appreciated that the described embodiments provide an active head restraint apparatus with a head restraint that can be locked in any one of a range of deployed positions between a start position and an end position, as determined by the teeth of the ratchet locking mechanism. Advantageously, this is achieved in an arrangement comprising simple mechanical parts, without the need for sensors or the supply of electric current to the seat to actuate the head restraint apparatus.

It will be appreciated that while the embodiments are all configured for a head restraint pad having a pair of support legs, this is not to be taken as limiting and the embodiments can be modified to operate with a head restraint pad having a single centrally disposed support leg.

It will be appreciated that the locking device is not limited to a ratchet mechanism as described. As an alternative a spring loaded pawl could engage a suitably located ratchet wheel.

It is to be understood that the terms 'forwards', 'backwards', 'clockwise', 'anticlockwise', 'left' and 'right' have been used for convenience and reference to these directions in the drawings should not be taken as limiting. It will further be appreciated that reference to 'vehicle collision' is intended to mean any rapid acceleration/deceleration of the vehicle which exceeds the levels expected during usual vehicle use, whether or not the acceleration/deceleration arises from a physical impact with another object or vehicle.

## Claims

1. A vehicle seat comprising a back support and an active head restraint apparatus (10; 110; 210; 310) pivotably mounted to the back support (211), the head restraint apparatus comprising:
a head restraint pad (12) coupled to lever means (30; 130; 230; 330) for causing pivot movement of the head restraint pad towards the head of an occupant of the seat when the occupant's back presses against the back support (221) to apply a force to the lever means due to vehicle collision, and
a ratchet means (34, 38; 134, 138; 234, 238; 324, 328) for allowing said pivot movement of the head restraint pad towards the occupant's head but substantially preventing return pivot movement of the head restraint pad (12); and
wherein the ratchet means arranged to be selectively releasable by the user in order to permit return pivoting movement of the head restraint pad.

2. A vehicle seat as claimed in claim 1, wherein at least one of the arcuate surfaces is axially displaceable for releasing engagement between the first ratchet member (134) and the second ratchet member (138).

3. A vehicle seat as claimed in any of the proceeding claims, wherein the lever means includes an actuating lever (230) which extends from the body (218) and has a transverse link (232) mounted at an end region thereof disposed remote from the body (218), the transverse link (232) extending substantially between opposed sides (213) of the back support (211) and having a first ratchet member (234) disposed at one end thereof for engagement with a second ratchet member (238) secured to the back support adjacent said one end.

4. A vehicle as claimed in claim 3, wherein the body (218) is mounted for pivoting movement about a transverse member (220) of the back support (211).

5. A vehicle seat as claimed in claim 3 or claim 4, wherein the transverse link is a back rest (232) of the back support (211) against which the occupant's back presses to activate the active head restraint apparatus during vehicle collision.

6. A vehicle seat as claimed in any one of claims 3 to 5, wherein the ratchet means is selectively releasable to permit return pivoting movement of the head restraint pad.

7. A vehicle seat as claimed in claim 6, wherein the second ratchet member (238) is provided on a ratchet guide member (242) fixed to the back support (211), the ratchet guide member defining a first guide track (246) and a second guide track (248) for the first ratchet member (234), the first ratchet member being displaceable relative to the ratchet guide member for moving between the first and second tracks.

8. A vehicle seat as claimed in claim 7, wherein the first track (246) is disposed above the second track (248) and the first ratchet member (234) is displaceable in the lengthways direction of the back support (221) for moving the first ratchet member into line with the first and second guide tracks (246, 248) for switching between said tracks, wherein the displacement of the first ratchet member (234) is provided by moving the head restraint pad in the lengthways direction of the back support (221).

9. A vehicle seat as claimed in claim 1, wherein the first ratchet member is carried on a support (36) carried by the body (26) and extending towards the rear of the back support, wherein the body comprises a sleeve (26) for a stem (14) that extends from the head restraint pad (12), the sleeve being supported by a carrier member (24) that is pivot mounted to a transverse member (20) of the back support.

10. A vehicle seat as claimed in claim 9, wherein the ratchet means is selectively releasable to permit return pivoting movement of the head restraint pad.

11. A vehicle seat as claimed in claim 10, wherein the support (36) projects through an opening provided in the carrier member (24) and extends circumferentially with respect to the sleeve (26) to permit rotation of the sleeve relative to the carrier member (24) for releasing engagement of the first ratchet member (134) from the second ratchet member (138).

12. A vehicle seat as claimed in claim 10 or claim 11, including a link between the sleeve (26) and one or more of the first and second ratchet members (34, 38), whereby rotation of the sleeve (26) actuates the link to release the first ratchet member (34) from engagement with the second ratchet member (38).

13. A vehicle seat as claimed in claim 1, wherein the body comprises a sleeve (326) which receives a leg or stem (314) that extends from the head restraint pad, the sleeve (326) being pivot mounted to a support member (350) fixed to the back support.

14. A vehicle seat as claimed in claim 13, wherein the first ratchet member (324) is provided on the sleeve (326) and the second ratchet member (328) is provided on the support member (350).

15. A vehicle seat as claimed in claim 13 or claim 14, wherein the sleeve (326) comprises at least one opening for receiving at least one pivot support member on which the sleeve pivots.

16. A vehicle seat as claimed in any one of claims 13 to 15, wherein the ratchet means is selectively releasable to permit return pivoting movement of the head restraint pad.

17. A vehicle seat as claimed in claim 16, wherein the sleeve (326) is axially displaceable with respect to the support member (350) for releasing the first ratchet member (324) from engagement with the second ratchet engagement member (328).

18. A vehicle seat as claimed in claim 17, further comprising biasing means (360) for axially biasing the sleeve (326) to bring the first ratchet member (324) into engagement with the second ratchet member (328).
